# EUROPEAN PATENT APPLICATION

(11) **EP 3 493 352 A1**
(43) Date of publication of application: **05.06.2019**
(21) Application number: 17834109.5
(22) Date of filing: 19.07.2017
(51) Int. Cl.: H02J 3/32, H02J 3/00, H02J 3/14, H02J 3/38, H02J 3/46, H02J 7/35, H02J 13/00

(54) **POWER MANAGEMENT DEVICE, POWER MANAGEMENT METHOD, AND POWER MANAGEMENT SYSTEM**

(30) Priority: 27.07.2016 JP 2016147511
(71) Applicant: KYOCERA Corporation, Kyoto 612-8501 (JP)
(72) Inventor: KITAJI, Mitsuhiro, Kyoto-shi Kyoto 612-8501 (JP)
(74) Representative: TBK
(86) International application number: PCT/JP2017/026035
(87) International publication number: WO 2018/021101

(57) **Abstract**

A power management apparatus comprises: a receiver configured to receive a power control message from an external server; a controller configured to control at least any one of a power flow amount from a power grid to a facility and a reverse power flow amount from the facility to the power grid based on the power control message; and a transmitter configured to transmit a control result of at least any one of the power flow amount and the reverse power flow amount to the external server. The control result includes control amount information indicating a control amount of at least any one of the power flow amount and the reverse power flow amount and identification information for identifying a contributing equipment that contributes to control of at least any one of the power flow amount and the reverse power flow amount.

## Description

### TECHNICAL FIELD

The present invention relates to a power MANAGEMENT APPARATUS, a power management method, and a power management system.

### BACKGROUND

In recent years, power control messages, such as a message that requests control of a power flow amount from a power grid to a facility, and a message that requests control of a reverse power flow amount from a facility to a power grid, have been known. For example, power control messages such as those described above are transmitted based on a power demand-supply balance of a power grid (for example, Patent Literatures 1 and 2).

If a power flow amount or a reverse power flow amount is controlled, there may be a case where an incentive is provided in accordance with degree of contribution to stabilization of a power grid.

However, a variety of methods can be considered as a method of controlling a power flow amount or a reverse power flow amount. For this reason, there is possibility that simply providing an incentive based only on a control amount causes unfairness between control entities of a power flow amount or a reverse power flow amount.

### CITATION LIST

### PATENT LITERATURE

Patent Literature 1: JP 2013-169104 A
Patent Literature 2: JP 2014-128107 A

### SUMMARY

A power management apparatus according to a first aspect comprises: a receiver configured to receive a power control message from an external server; a controller configured to control at least any one of a power flow amount from a power grid to a facility and a reverse power flow amount from the facility to the power grid based on the power control message; and a transmitter configured to transmit a control result of at least any one of the power flow amount and the reverse power flow amount to the external server. The control result includes control amount information indicating a control amount of at least any one of the power flow amount and the reverse power flow amount and identification information for identifying a contributing equipment that contributes to control of at least any one of the power flow amount and the reverse power flow amount.

A power management method according to a second aspect comprise: a step A for receiving a power control message from an external server; a step B for controlling at least any one of a power flow amount from a power grid to a facility and a reverse power flow amount from the facility to the power grid based on the power control message; and a step C for transmitting a control result of at least any one of the power flow amount and the reverse power flow amount to the external server. The control result includes control amount information indicating a control amount of at least any one of the power flow amount and the reverse power flow amount and identification information for identifying a contributing equipment that contributes to control of at least any one of the power flow amount and the reverse power flow amount.

A power management system according to a third aspect comprise: a receiver configured to receive a power control message from an external server; a controller configured to control at least any one of a power flow amount from a power grid to a facility and a reverse power flow amount from the facility to the power grid based on the power control message; and a transmitter configured to transmit a control result of at least any one of the power flow amount and the reverse power flow amount to the external server. The control result includes control amount information indicating a control amount of at least any one of the power flow amount and the reverse power flow amount and identification information for identifying a contributing equipment that contributes to control of at least any one of the power flow amount and the reverse power flow amount.

### BRIEF DESCRIPTION OF DRAWINGS

Fig. 1 is a diagram illustrating a power management system 1 according to an embodiment.
Fig. 2 is a diagram illustrating an EMS 160 according to the embodiment.
Fig. 3 is a diagram illustrating an external server 400 according to the embodiment.
Fig. 4 is a diagram illustrating a power management method according to the embodiment.

### DESCRIPTION OF EMBODIMENTS

Hereinafter, an embodiment will be described with reference to the drawings. In description of the drawings below, the same or similar sections are attached with the same or similar reference signs.

However, the drawings are schematic drawings, and a ratio of each dimension and the like may be different from actual ones. Accordingly, a specific dimension and the like need to be determined in consideration of the description below. Between mutual drawings, there may also be sections having dimensions that are mutually different in relationships or ratios.

### [Embodiment]

### (Management system)

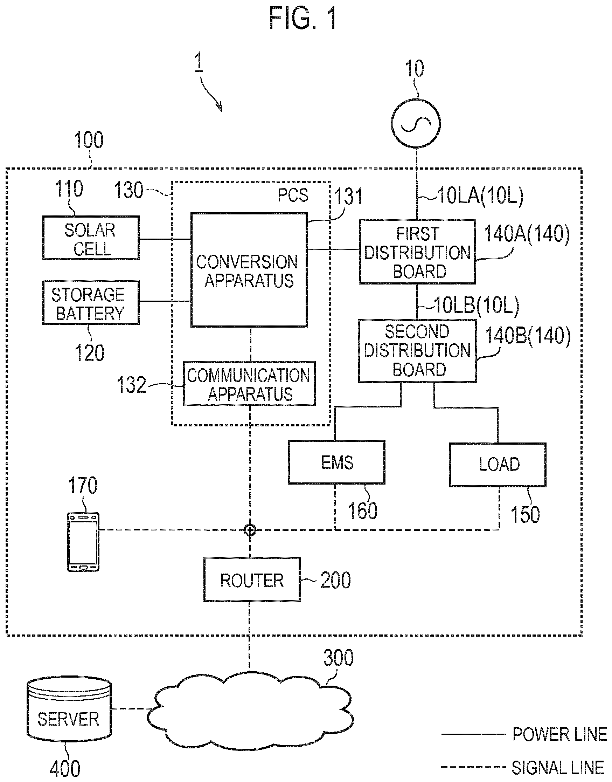

Hereinafter, a management system according to an embodiment will be described. As shown in Fig. 1, a management system 1 has a demanding house facility 100 (hereinafter referred to as the facility 100) and an external server 400. The facility 100 has a router 200. The router 200 is connected to the external server 400 via a network 300. The router 200 constitutes a local area network, and is connected to each device (for example, a communication apparatus 132 of a PCS 130, a load 150, an EMS 160, a display device 170, and the like). In Fig. 1, a solid line shows a power line, and a dotted line shows a signal line. Note that the configuration is not limited to the above, and a signal may be transmitted through a power line.

The facility 100 has a solar cell 110, a storage battery 120, the PCS 130, a distribution board 140, the load 150, the EMS 160, and the display device 170.

The solar cell 110 is a photoelectric conversion apparatus that generates power in accordance with received light. The solar cell 110 outputs generated DC power. A power generation amount of the solar cell 110 varies in accordance with an amount of insolation radiated to the solar cell 110. The solar cell 110 is an example of a distributed power source that enables reverse power flow from the facility 100 to a power grid 10.

The storage battery 120 is a device that accumulates power. The storage battery 120 outputs accumulated DC power. In the embodiment, the storage battery 120 may be a distributed power source that enables reverse power flow from the facility 100 to the power grid 10, or may be a distributed power source that does not permit reverse power flow from the facility 100 to the power grid 10

The PCS 130 is an example of a power conversion apparatus (power conditioning system, PCS) that converts at least any of output power from a distributed power source and input power to a distributed power source to AC power or DC power. In the embodiment, the PCS 130 has a conversion apparatus 131 and a communication apparatus 132.

The conversion apparatus 131 converts DC power from the solar cell 110 to AC power, and also converts DC power from the storage battery 120 to AC power. Moreover, the conversion apparatus 131 converts AC power from the power grid 10 to DC power. The conversion apparatus 131 is connected to a main power line 10L (here, a main power line 10LA and a main power line 10LB) connected to the power grid 10 with a first distribution board 140A provided between them, and is also connected to both the solar cell 110 and the storage battery 120. The main power line 10LA is a power line that connects the power grid 10 and the first distribution board 140A. The main power line 10LB is a power line that connects the first distribution board 140A and a second distribution board 140B. Note that the present embodiment describes a hybrid-type power conversion apparatus in which the conversion apparatus 131 is connected to the solar cell 110 and the storage battery 120. Alternatively, the configuration may be such that a power conversion apparatus is connected to each of the solar cell 110 and the storage battery 120. In a case where a power conversion apparatus is connected to each of the solar cell 110 and the storage battery 120, each of the power conversion apparatuses can perform control similar to that performed by the hybrid-type power conversion apparatus of the present embodiment.

The communication apparatus 132 is connected to the conversion apparatus 131, receives a variety of messages to the conversion apparatus 131, and also transmits a variety of messages from the conversion apparatus 131. A protocol (for example, an original protocol) applied to the PCS 130 is used in communication between the communication apparatus 132 and the conversion apparatus 131.

In the embodiment, the communication apparatus 132 is connected to the router 200 by wire or by radio. The communication apparatus 132 is connected to the external server 400 via the router 200, and may also receive a power suppression message from the external server 400. The power suppression message includes at least any one of a power flow suppression message (demand response, DR) for requesting suppression of a power flow amount from the power grid 10 to the facility 100 and a reverse power flow suppression message for requesting suppression of a reverse power flow amount from the facility 100 to the power grid 10. Secondary, the communication apparatus 132 is connected to the EMS 160 via the router 200, and may also perform communication of a predetermined command having a predetermined format with the EMS 160. The predetermined format is not specifically limited, and, for example, an ECHONET system, an ECHONET Lite system, an SEP 2.0 system, a KNX system, or the like can be used.

The load 150 is a device that consumes power supplied via a power line. For example, the load 150 includes apparatuses, such as an air conditioner, a lighting device, a refrigerator, and a television. The load 150 may also be a single apparatus, or may also include a plurality of apparatuses.

The EMS 160 is a power management apparatus (energy management system, EMS) that manages power information indicating power in the facility 100. The power in the facility 100 indicates power flowing in the facility 100, power purchased by the facility 100, power sold by the facility 100, and the like. Accordingly, for example, the EMS 160 manages at least the PCS 130.

The EMS 160 may also control a power generation amount of the solar cell 110, a charging amount of the storage battery 120, and a discharging amount of the storage battery 120. The EMS 160 may also be configured integrally with the distribution board 140. The EMS 160 is a device connected to the network 300, and a function of the EMS 160 may also be supplied by a cloud service via the network 300.

The EMS 160 is connected to the external server 400 via the router 200, and performs communication with the external server 400. The EMS 160 is connected to each equipment (for example, the communication apparatus 132 of the PCS 130 and the load 150) via the router 200, and may also communicate with each equipment. The EMS 160 is connected to the display device 170 via the router 200, and may also perform communication with the display device 170.

The display device 170 displays a state of the PCS 130. The display device 170 may also display power information indicating power in the facility 100. For example, the display device 170 is a smartphone, a tablet, a television, a personal computer, or a dedicated terminal. The display device 170 is connected to the EMS 160 by wire or by radio, and performs communication with the EMS 160. The display device 170 may also perform communication of a predetermined command having a predetermined format with the EMS 160. The display device 170 receives data necessary for displaying a variety of types of information from the EMS 160.

The network 300 is a communication network that connects the EMS 160 and the external server 400. The network 300 may also be a public communication line, such as the Internet. The network 300 may also include a mobile communication network. Furthermore, the network 300 may also be a private communication line, or a general communication line.

The external server 400 is a server managed by a company, such as a power generation company, a power transmission and distribution company, a retailer, or the like. The external server 400 transmits a power suppression message including any one of a power flow suppression message and a reverse power flow suppression message to the facility 100 (the PCS 130 or the EMS 160). The reverse power flow message may also be considered as an output suppression message that instructs suppression of output of a distributed power source.

### (Power management apparatus)

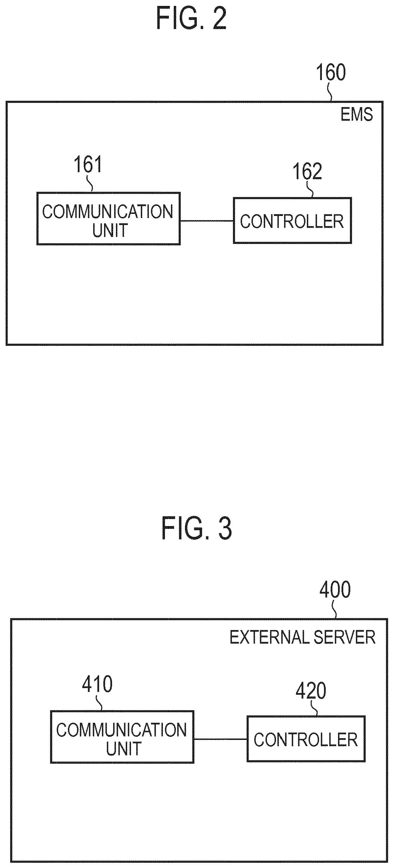

Hereinafter, a power management apparatus according to the embodiment will be described. As shown in Fig. 2, the EMS 160 has a communication unit 161 and a controller 162.

The communication unit 161 is configured with a communication module, and performs communication with the external server 400. The communication unit 161 receives a power suppression message from the external server 400. The communication unit 161 transmits a suppression result of at least any of a power flow amount and a reverse power flow amount to the external server 400. The suppression result includes suppression amount information indicating a suppression amount of at least any one of a power flow amount and a reverse power flow amount and identification information for identifying a contributing equipment dedicating to suppression of at least any one of a power flow amount and a reverse power flow amount. The suppression result may be a result obtained in the middle of suppression, or an achievement after a suppression period is finished. The suppression amount information may also be information indicating a suppression amount of each contributing equipment. For example, in connection with suppression of a power flow amount, the contributing equipment may also be the load 150 that reduces power consumption or the storage battery 120 that increases discharging power. In connection with suppression of a reverse power flow amount, the contributing equipment may also be the load 150 that increases power consumption or the storage battery 120 that increases accumulated power.

Here, the suppression result may also include state information indicating a state of a contributing equipment influenced by suppression of at least any one of a power flow amount and a reverse power flow amount. For example, in a case where a contributing equipment is the storage battery 120, the state information includes information indicating any one of the number of times of charging of the storage battery 120, the number of times of discharging of the storage battery 120, and a life of the storage battery 120. The number of times of charging and the number of times of discharging may also be an accumulated number of times counted from installation of the storage battery 120, and may also be an accumulated number of times during a suppression period of a power flow amount or a reverse power flow amount.

The suppression result may also include energy information identifying energy used by a contributing equipment under suppression of at least any one of a power flow amount and a reverse power flow amount. The energy information may also include information indicating a type of energy and an amount of energy.

For example, in a case where suppression of a power flow amount is performed by output power of the solar cell 110, a type of energy is natural energy, and an amount of energy is an insolation amount. In such a case, an amount of energy may also be deemed to be zero, and may also be expressed as a power selling price of output power of the solar cell 110. In a case where suppression of a power flow amount is performed by output power of a fuel cell, a type of energy is gas, and an amount of energy is a purchased gas amount. In such a case, an amount of energy may also be expressed by a gas purchase price. In a case where suppression of a power flow amount is performed by the storage battery 120, a type of energy is electric power, and an amount of energy is a power amount.

Moreover, in a case where suppression of a power flow amount is performed by the storage battery 120, the energy information may include source information identifying energy of a source that supplies power to be accumulated in the storage battery 120. The source includes the power grid 10, the solar cell 110, a fuel cell, and the like. Accordingly, the source information includes the power grid 10, the solar cell 110, a fuel cell, and the like. In such a case, the amount of energy may also be an amount of energy of each source.

Here, a content of the energy information with respect to suppression of reverse power flow is also similar to that in a case of suppression of a power flow amount. In suppression of reverse power flow, the amount of energy is preferably information by which lost profits that cannot be obtained by the suppression of reverse power flow is identifiable.

In the embodiment, the suppression result is used for determination of an incentive provided for suppression of at least any one of a power flow amount and a reverse power flow amount. That is, the suppression result is used as information that identifies cost borne by the facility 100 for suppression of a power flow amount or a reverse power flow amount. For example, the larger the cost borne by the facility 100, the larger an incentive to be provided becomes.

The controller 162 is configured with a memory and a CPU, and controls the EMS 160. For example, the controller 162 controls at least any one of a power flow amount or a reverse power flow amount based on a power suppression message. The controller 162 may also suppress any one of a power flow amount and a reverse power flow amount by controlling the PCS 130.

Here, the controller 162 may select a contributing equipment that contributes to suppression of at least any one of a power flow amount and a reverse power flow amount based on the energy information from the viewpoint of expecting an incentive. The controller 162 may also select a contributing equipment on the basis of an incentive itself.

### (External server)

Hereinafter, an external server according to the embodiment will be described. As shown in Fig. 3, the external server 400 has a communication unit 410 and a controller 420.

The communication unit 410 is configured with a communication module, and performs communication with the EMS 160. The communication unit 410 may perform communication with the communication apparatus 132. The communication unit 410 transmits a power suppression message to the EMS 160. The communication unit 410 may also transmit a power suppression message to the PCS 130. The communication unit 410 receives a suppression result from the EMS 160.

The controller 420 is configured with a memory and a CPU, and controls the external server 400. For example, the controller 420 creates a demand-supply adjustment plan on the basis of a power demand-supply balance of the power grid 10, and instructs the communication unit 410 to transmit a power suppression message on the basis of the demand-supply adjustment plan.

In the embodiment, the controller 420 determines an incentive to be provided to the facility 100 on the basis of a suppression result. For example, the controller 420 identifies cost borne by the facility 100 for suppression of a power flow amount or a reverse power flow amount on the basis of a suppression result, and determines an incentive in accordance with the cost. The larger the cost borne by the facility 100, the larger an incentive the controller 420 provides.

### (Power management method)

Hereinafter, a power management method according to the embodiment will be described. Here, a case where a power suppression message is transmitted to the EMS 160 will be exemplified.

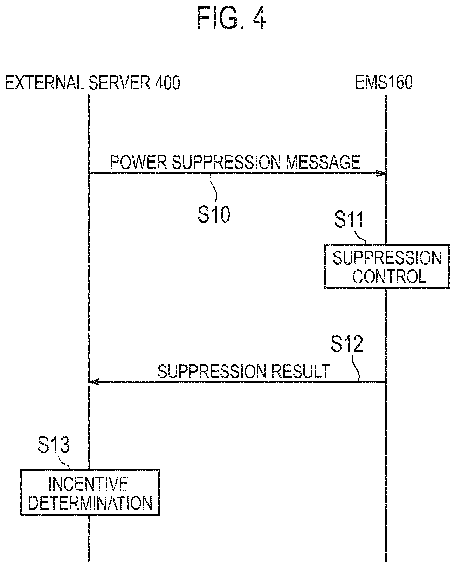

As shown in Fig. 4, in Step S10, the external server 400 transmits a power suppression message to the EMS 160.

In Step S11, the EMS 160 suppresses a power flow amount or a reverse power flow amount on the basis of the power suppression message.

In Step S12, the EMS 160 transmits a suppression result of a power flow amount and a reverse power flow amount to the external server 400. A content of the suppression result is as described above.

In Step S13, the external server 400 determines an incentive to be provided to the facility 100 on the basis of the suppression result. A method of determining an incentive is as described above.

### (Function and effect)

In the embodiment, the EMS 160 transmits a suppression result including suppression amount information and identification information for identifying a contributing equipment to the external server 400. Accordingly, an incentive to be provided to the facility 100 can be determined appropriately in accordance with cost borne by the facility 100 for suppression of a power flow amount or a reverse power flow amount.

### (First modification)

Hereinafter, a first modification of the embodiment will be described. Hereinafter, a difference from the embodiment will be mainly described.

In the first modification, the EMS 160 selects a contributing equipment on the basis of suppression influence information that influences suppression of a power flow amount or a reverse power flow amount. The suppression influence information includes at least any of facility information and facility environment information.

The "facility information" includes at least any one piece of load information relating to a load of the facility 100 and distributed power source information relating to a distributed power source of the facility 100. By using the load information, a load having a margin for suppressing a power flow amount or a reverse power flow amount can be selected as a contributing equipment. By using the distributed power source information, whether or not a power flow amount or a reverse power flow amount can be suppressed by adjusting output of a distributed power source can be predicted.

The "facility environment information" is information that shows an environment of the facility 100. The facility environment information includes an outside air temperature of the facility 100, an indoor temperature of the facility 100, existence or non-existence and a position of the user in the facility 100, and the like. By using the facility environment information, an equipment that has a small influence on quality of life (QOL) can be selected as a contributing equipment.

Here, the EMS 160 may also determine existence or non-existence and a position of the user by using a terminal (a smartphone or a tablet) held by the user. The EMS 160 may also determine existence or non-existence of the user on the basis of whether or not a terminal is connected to a LAN configured with the router 200. The EMS 160 may also determine existence or non-existence of the user on the basis of a result of detection of an entrance and exit card held by the user. The EMS 160 may also transmit suppression influence information to the external server 400.

### (Other embodiments)

The present invention has been described based on the embodiment described above. However, a statement and the drawings constituting part of the disclosure should not be understood as limiting the present invention. The present disclosure will clarify a variety of alternative embodiments, examples, and operation techniques for a person skilled in the art.

The embodiment exemplifies the EMS 160 as a power management apparatus. However, the embodiment is not limited to the above. The power management apparatus may also be the PCS 130. The power management apparatus may also be obtained as the PCS 130 and the EMS 160.

In the embodiment, suppression of a power flow amount and a reverse power flow amount is mainly described. That is, a power suppression message is exemplified as a power control message. However, the embodiment is not limited to the above. Specifically, the embodiment is applicable to a system that uses a distributed power source provided in the facility 100 as a virtual power plant (VPP). In such a case, the power suppression message may be read as a message for requesting control of a distributed power source installed in the facility 100. Furthermore, the term "suppression" may be read as "control". That is, the embodiment is applicable to a case where a power flow amount or a reverse power flow amount is increased. Furthermore, in a case where a distributed power source is operated and controlled as a VPP, an operation and an action instructed to the distributed power source may also be sent as a suppression result.

Note that an entire content of Japanese Patent Application No. 2016-147511 (filed on July 27, 2016) is incorporated into the description of the present application by reference.

### INDUSTRIAL APPLICABILITY

According to a mode, a power management apparatus, a power management method, and a power management system that enable an incentive to be appropriately provided in accordance with degree of contribution to stabilization of a power grid can be provided.

## Claims

1. A power management apparatus, comprising:
a receiver configured to receive a power control message from an external server;
a controller configured to control at least any one of a power flow amount from a power grid to a facility and a reverse power flow amount from the facility to the power grid based on the power control message; and
a transmitter configured to transmit a control result of at least any one of the power flow amount and the reverse power flow amount to the external server, wherein
the control result includes control amount information indicating a control amount of at least any one of the power flow amount and the reverse power flow amount and identification information for identifying a contributing equipment that contributes to control of at least any one of the power flow amount and the reverse power flow amount.

2. The power management apparatus according to claim 1, wherein the control amount information is information indicating the control amount of each of the contributing equipment.

3. The power management apparatus according to claim 1 or 2, wherein the control result includes state information indicating a state of the contributing equipment influenced by control of at least any one of the power flow amount and the reverse power flow amount.

4. The power management apparatus according to claim 3, wherein
the contributing equipment is a storage battery, and
the state information includes information indicating any one of the number of times of charging of the storage battery, the number of times of discharging of the storage battery, and a life of the storage battery.

5. The power management apparatus according to any one of claims 1 to 4, wherein the control result includes energy information identifying energy used by the contributing equipment when at least any one of the power flow amount and the reverse power flow amount is controlled.

6. The power management apparatus according to claim 5, wherein the energy information includes information indicating a type of the energy and an amount of the energy.

7. The power management apparatus according to claim 5 or 6, wherein
the contributing equipment is a storage battery, and
the energy information includes source information identifying energy of a source that supplies power to be accumulated in the storage battery.

8. The power management apparatus according to any one of claims 5 to 7, wherein the controller selects the contributing equipment based on the energy information.

9. The power management apparatus according to any one of claims 1 to 8, wherein the control result is used for determination of an incentive provided with respect to control of at least any one of the power flow amount and the reverse power flow amount.

10. The power management apparatus according to claim 9, wherein the controller selects the contributing equipment based on the incentive.

11. A power management method, comprising:
a step A for receiving a power control message from an external server;
a step B for controlling at least any one of a power flow amount from a power grid to a facility and a reverse power flow amount from the facility to the power grid based on the power control message; and
a step C for transmitting a control result of at least any one of the power flow amount and the reverse power flow amount to the external server, wherein
the control result includes control amount information indicating a control amount of at least any one of the power flow amount and the reverse power flow amount and identification information for identifying a contributing equipment that contributes to control of at least any one of the power flow amount and the reverse power flow amount.

12. A power management system, comprising:
a receiver configured to receive a power control message from an external server;
a controller configured to control at least any one of a power flow amount from a power grid to a facility and a reverse power flow amount from the facility to the power grid based on the power control message; and
a transmitter configured to transmit a control result of at least any one of the power flow amount and the reverse power flow amount to the external server, wherein
the control result includes control amount information indicating a control amount of at least any one of the power flow amount and the reverse power flow amount and identification information for identifying a contributing equipment that contributes to control of at least any one of the power flow amount and the reverse power flow amount.
